# EUROPÄISCHE PATENTSCHRIFT

(11) **EP 1 344 687 B1**
(45) Veröffentlichungstag und Bekanntmachung des Hinweises auf die Patenterteilung: **17.12.2008**
(21) Anmeldenummer: 03005291.4
(22) Anmeldetag: 11.03.2003
(51) Int. Cl.: B60R 13/02, B60R 13/04

(54) **Dekor-Zierteil**
Finishing member
Elément de décoration

(30) Priorität: 14.03.2002 DE 10211171
(43) Veröffentlichungstag der Anmeldung: 17.09.2003
(73) Patentinhaber: Angell-Demmel Europe GmbH, 88131 Lindau (DE)
(72) Erfinder: Tämmerich, Rolf, 88161 Lindenberg (DE)
(74) Vertreter: Riebling, Peter

(56) Entgegenhaltungen:
- DE-A- 1 729 168
- DE-A- 19 914 092
- FR-A- 2 244 618
- US-A- 5 965 222
- PATENT ABSTRACTS OF JAPAN Bd. 0123, Nr. 32 (M-738), 8. September 1988 (1988-09-08) & JP 63 095913 A (MOLTEN CORP), 26. April 1988 (1988-04-26)

## Beschreibung

Die Erfindung betrifft ein Dekor-Zierteil nach dem Oberbegriff des Patentanspruchs 1. Derartige Dekor-Zierteile werden vornehmlich in Land-, Luft- oder Wasserfahrzeugen verwendet. Sie dienen zur Ausgestaltung des Innenraumes, insbesondere als Armaturenbrett-Elemente, Mittel-Konsole oder als Türzierstäbe.

Bisher war es bekannt, ein mindestens zweiteiliges Zierteil zu verwenden, bei dem die frontseitige Dekorplatte aus Metall war, die von einem aus Kunststoff bestehenden Trägerteil getragen wurde.

Die aus Metall bestehende Dekorplatte war vornehmlich ein Aluminiumblech mit einer Dicke von mehr als 0,3 mm.
Bei derartig dicken Blechen besteht der Vorteil, dass man die Frontseite des Bleches mit entsprechenden Verzierungen und Oberflächen versehen kann. Beispielsweise ist es bekannt, eine derartige Oberfläche zu bürsten, mit einem transparenten Decklack zu versehen, mit entsprechenden Bedruck-Oberflächen zu gestalten und dergleichen mehr.

Bisher wurde diese Dekorplatte jedoch nur als sogenanntes Krimp- oder Bördelteil auf dem aus Kunststoff bestehenden Trägerteil befestigt. Hierzu war es bekannt, die Dekorplatte mit überstehenden Rändern auf das darunter liegende Trägerteil aufzulegen und die Ränder der Dekorplatte dann umzubördeln oder zu krimpen, so dass die Dekorplatte an dem Trägerplastik befestigt war.

Nachteil dieses bekannten Befestigungsverfahrens ist jedoch, dass der Krimpvorgang relativ lange dauert, hochgenaue Werkzeuge erfordert und somit ein relativ teures Montageverfahren ist.

Es sind damit auch entsprechend hohe Kosten für das damit hergestellte Zierteil verbunden.

Aus dem recherchierten Stand der Technik gehen 5 Druckschriften hervor, die sich mit dieser Thematik auseinandersetzen. Es handelt sich dabei um die JP 63095913 A, die US 5,965,222 A, die FR2 244 618 A, die DE 1 729 168 A und die DE 199 14 092 A1.

Mit der JP 60395913 A wird eine verbesserte Herstellung eines dekorativen Bauteils offenbart, wie zum Beispiel einer Metallfolie mit aufgespritztem ABS-Harz, wobei das Auftreten von Falten auf der Oberfläche des Bauteils mittels Verwendung einer Form zum Tiefziehen und Spritzen vermieden wird. Diese Erfindung hat den Nachteil, dass der Verbund zwischen der Metallfolie und des Harzes lediglich auf deren Oberflächen stattfindet und keine Ausnehmungen aufweist, in die das ABS-Harz eingreift.

Mit der US 5,965,222 A wird ein Verfahren zur Herstellung von Innenausstattungsteilen von Kraftfahrzeugen offenbart, wobei ein Basisteil mit einer dreidimensionalen Oberflächenstruktur mit Harz überzogen wird bis alle Erhebungen überzogen sind und anschließend das Harz bis zur Oberfläche der Erhebungen abgeschliffen wird, bis die Spitzen der Erhebungen mit angeschliffen werden und anschließend mit einem Klarlack überzogen. Diese Erfindung hat den Nachteil, dass die Herstellung des Bauteils relativ aufwendig ist, da die Oberfläche der Harzschicht bis zum Austritt der Spitzen der Erhebungen abgeschliffen wird, um somit einen entsprechend vorteilhaften Verbund zwischen Basisteil und Harzschicht herzustellen.

Mit der FR 2244618 A wird ein Verfahren zur Herstellung eines Gegenstandes aus Kunststoff offenbart, wobei ein dünnes Blech in eine Form gedrückt wird der Stempel teilweise wieder zurückfährt und der entstehende Hohlraum mit einem Harz ausgespritzt wird, um somit ein relativ glatte Oberfläche von großflächigen Bauteilen zu erhalten.
Diese Erfindung hat den Nachteil, dass hier ebenfalls keine Ausnehmungen zur deutlichen Verbesserung des Verbundes zwischen Harzschicht und Metallschicht vorhanden sind.

Mit der DE 1729168 A ist ein Verfahren zur Beschichtung von Kunststoffteilen mit reliefartiger Oberfläche offenbart, wobei die reliefartige Oberfläche in einer einfachen Art und Weise mit einem metallischen Überzug ausgebildet ist und sich unter Druck des eingespritzten Kunststoffes ausbildet. Diese Erfindung hat den Nachteil, dass der Verbund der metallischen Oberfläche und des Kunststoffes lediglich eine haftschlüssige Verbindung darstellt und nicht zusätzlich einen erfindungsgemäßen formschlüssigen Verbund.

Die DE 199 14 092 A1 beschreibt ein Verfahren zur Herstellung eines Verkleidungs- und Zierteils und ein danach hergestelltes Verkleidungs- und Zierteil. Hierzu wird ein Dekorteil in eine Spritzgussform eingelegt, und beim Schließen der Spritzgussform das Dekorteil durch eine an dem Spritzgussformteil vorgesehene Schneid- und Tauchkante durch Abscherung des äußeren Randes konturgenau geschnitten. Der Verbund zwischen dem Dekorteil und dem an die Rückseite angespritzten Trägerteil wird durch einen Haftverbund erzielt.
Der Nachteil dieser Erfindung ist, dass es keinerlei formschlüssige Verbindungen gibt, beispielsweise in der Weise, dass das Kunststoffteil mit Teilen durch Ausnehmungen in dem Dekorteil hindurchdringt, um so einen besseren Verbund zu erzielen.

Der Erfindung liegt deshalb die Aufgabe zugrunde, den Verbund zwischen einem aus Kunststoff bestehenden Trägerteil und einem mit dem Trägerteil verbundenen Dekorteil wesentlich zu verbessern.

Zur Lösung der gestellten Aufgabe dienen die Merkmale des Anspruches 1, wobei in der Oberfläche der Dekorplatte zwei Ausbrechungen oder Ausnehmungen ausgebildet sind, durch welche das Kunststoffmaterial des Trägerteils hindurchgreift.

Mit dieser technischen Lehre wird der wesentliche Vorteil erreicht, dass man nun einen wesentlich besseren, nämlich neben einem haftschlüssigen auch einen formschlüssigen Verbund zwischen dem Dekorteil und dem aus Kunststoff bestehenden Trägerteil erreicht wird.

Zudem ergibt sich der weitere wichtige Vorteil, dass durch das Hindurchgreifen von Teilen des Trägerteils durch das Material des Dekorteils hindurch sich ein anderer, verbesserter ästhetischer Effekt ergibt.

So ist es beispielsweise möglich, im Innenraum des Trägerteils eine Beleuchtung anzuordnen, die sich nun in dem gesamten Trägerteil verteilt und in einer besonders augenschonender Weise durch die Durchbrechungen im Dekorteil im Bereich der dort angeordneten Dekorelemente sichtbar ist.

Wichtig bei dieser Art der Herstellung ist es, dass ein guter Haftverbund während des Spritzgießverfahrens zwischen dem Trägerteil und der metallischen Dekorplatte hergestellt wird. Es wird nämlich aus Kostengründen darauf verzichtet, dass an der Rückseite der Dekorplatte entsprechende Rastnoppen, Ansätze und dergleichen angeordnet werden, weil dies zu erhöhten Herstellungskosten führen würde. Aus diesem Grunde ist die Rückseite der Dekorplatte vollkommen glatt und eben und muss demzufolge das aus Kunststoff bestehende Trägerteil aufnehmen und einen festen Haftverbund mit diesem eingehen.

Zu diesem Zweck sieht eine erste Ausführungsform der Erfindung vor, dass das Kunststoff-Trägerteil auf die Rückseite der Dekorplatte angespritzt wird und mit nach außen gerichteten Schenkeln den jeweils zugeordneten Schenkel der Dekorplatte untergreift.

Auf diese Weise wird sozusagen die Dekorplatte von dem Kunststoff-Trägerteil allseitig getragen und untergriffen.

In der hier bestehenden Ausführungsform besteht die Dekorplatte im Wesentlichen aus einem im Querschnitt U-förmigen Teil. Hierauf ist die Erfindung jedoch nicht beschränkt. Die Dekorplatte kann ein beliebiges, auch sphärisches und dreidimensional verformtes, Aluminiumblech sein, welches mit dem erfindungsgemäßen Kunststoff-Trägerteil hinterspritzt wird.
Ebenso kann das Kunststoff-Trägerteil nicht nur ein rechteckförmiges Gebilde sein, sondern es kann beliebige Aufnahmen, Kernteile, Aufnahmebohrungen und Ansätze tragen, so dass nach der Entnahme dieses Kombinationsteils aus der Spritzgussform das Zierteil bereits schon vollkommen fertiggestellt ist. Es bedarf keinerlei Nachbearbeitungen mehr, und dies ist ein wesentlicher Vorteil gegenüber dem übrigen Stand der Technik.

Es wurde eingangs bereits schon darauf hingewiesen, dass ein relativ dickes Aluminiumblech von einer Stärke von beispielsweise mehr als 0,3 mm verwendet wird. Dies hat den Vorteil, dass ein derartiges Aluminiumteil nun bereits fertig konfektioniert ist. Hierunter wird verstanden, dass die Oberfläche dieser Dekorplatte beispielsweise eine Riffelung oder eine Bürstung trägt, dass diese Oberfläche dann durch beispielsweise einen transparenten Klarlack verschlossen ist und dass auf der Oberfläche noch eine Druckfarbe, z. B. im Siebdruck, aufgebracht wurde.

Die Dekorplatte bedarf also keinerlei Nachbearbeitung mehr. Dies ist der wesentliche Unterschied zum Stand der Technik, bei dem es im übrigen bekannt war, dünne Aluminiumfolien mit derartigen Kunststoff-Trägerteilen zu verbinden.

Nach der Entnahme derartiger Zierteile, die mit dünnen Aluminiumfolien hergestellt waren, musste diese Aluminiumfolie dann aufwändig fertig konfektioniert werden. Dies entfällt nach der vorliegenden Erfindung.

In der Erfindung ist es vorgesehen, dass in der Oberfläche der Dekorplatte Ausbrechungen oder Ausnehmungen sind, durch welche das Kunststoffmaterial des Trägerteils hindurch greift. Auf diese Weise werden in der Dekorplatte noch zusätzliche Sichtelemente geschaffen, die den Sichteindruck des Zierteils bestimmen. Derartige Sichtelemente können z. B. Anzeigeelemente sein oder Funktionselemente oder auch Taster, Schaltelemente und dergleichen mehr. Natürlich kann das Kunststoffmaterial auch transparent ausgebildet sein, so dass die Möglichkeit besteht, die Anzeige- und Funktionselemente von der Rückseite her zu beleuchten. Mit der Anbringung von Durchbrechungen in der Oberfläche der Dekorplatte besteht also der weitere wesentliche Vorteil, dass das Kunststoffmaterial in die Dekorplatte mit eindringt und hier doch noch ein besserer Verbund stattfindet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf das Zierteil,
- Figur 2:: Schnitt durch das Zierteil gemäss der Linie II-II in Figur 1,
- Figur 3:: eine gegenüber Figur 2 abgewandelte Ausbildung der Seiten-Schenkel,
- Figur 4:: eine gegenüber Figur 3 abgewandelte Ausführungsform der Seitenschenkel,
- Figur 5:: vergrößerter Schnitt durch die Dekorplatte (ohne Trägerteil),

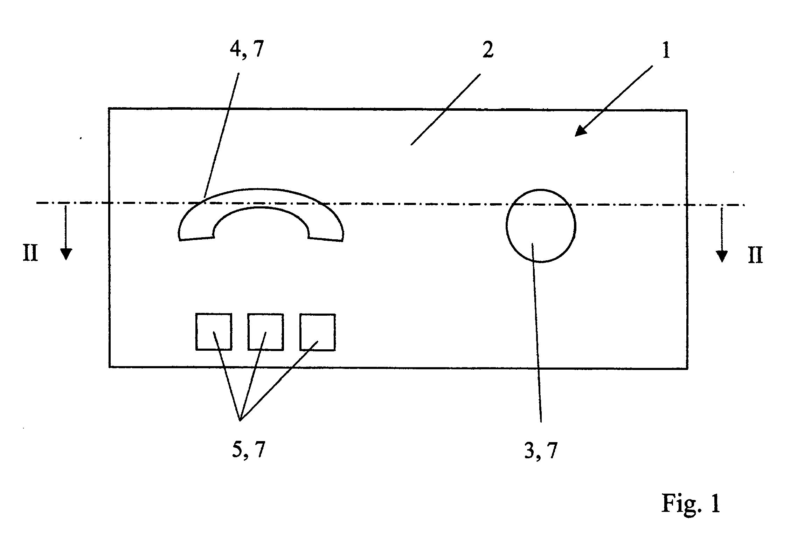

In Figur 1 ist allgemein ein Zierteil 1 dargestellt, welches in seiner einfachsten Ausführungsform aus einem zweiteiligen Teil besteht.

Das obere Teil wird durch eine metallische Dekorplatte 2 gebildet. Diese Dekorplatte ist bevorzugt ein Aluminiumblech von einer Stärke mehr als 0,3 mm. Es können jedoch auch sämtliche anderen Metallbleche verwendet werden, wie z. B. Stahlbleche, Edelstahlbleche, Nickelstahlbleche und dergleichen mehr.

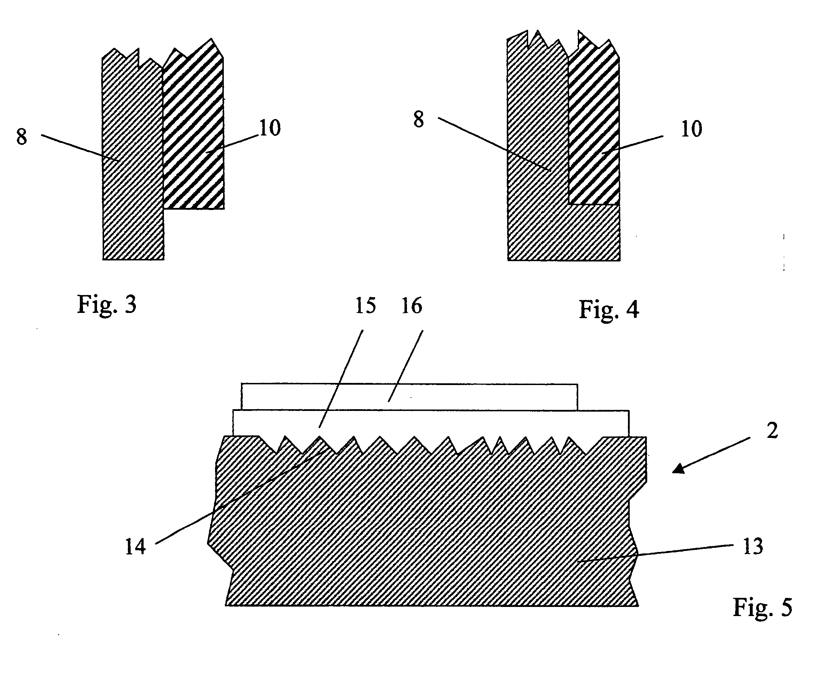

In der einfachsten Ausführungsform weist die Oberfläche der Dekorplatte 2 keinerlei Durchbrechungen auf. Sie ist vollkommen eben und durchgehend ausgebildet und trägt beispielsweise einen Oberflächenaufbau, wie er anhand der Figur 5 noch näher erläutert wird.

In einer davon abgewandelten Ausführungsform kann es jedoch vorgesehen sein, dass in der Dekorplatte 2 Durchbrechungen vorhanden sind, so dass dort Anzeigeelemente 4 oder Funktionselemente 5 (z. B. Taster oder Schalter) vorgesehen werden können oder auch Dekorelemente 3 mit einer entsprechenden Beschriftung oder einem Aufdruck oder dergleichen mehr.

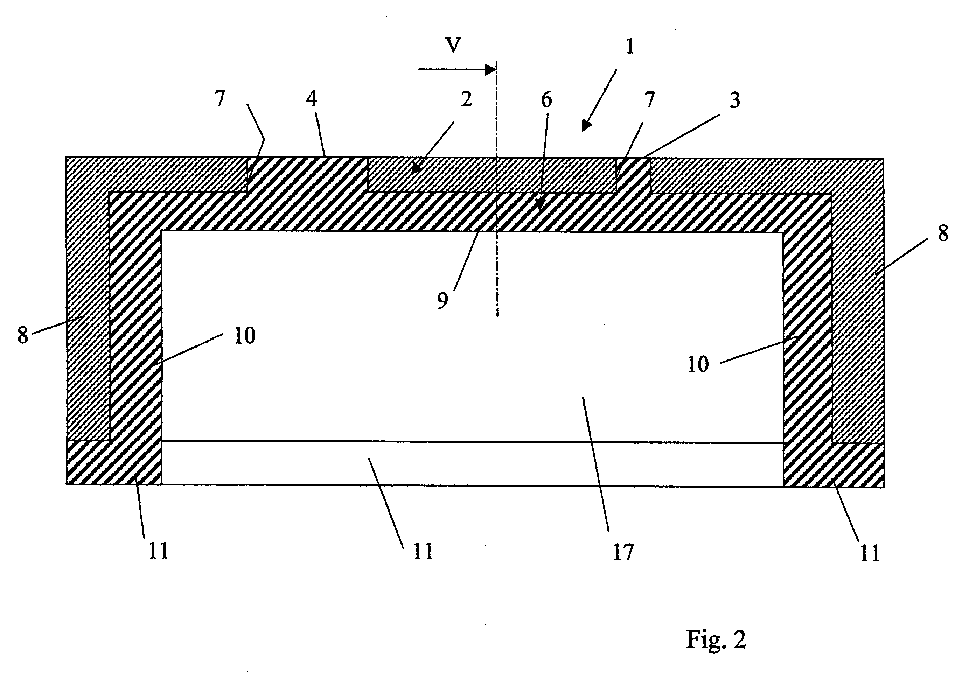

Diese zweite Ausführungsform ist in Figur 2 im Schnitt dargestellt.

Wichtig ist, dass die Dekorplatte 2 von ihrer geraden Frontplatte abknickende Seitenschenkel 8 aufweist, so dass die Dekorplatte 2 etwa ein U-förmiges Profil aufweist.

Wie in der Beschreibungseinleitung erwähnt wurde, ist die Erfindung jedoch nicht auf die Ausbildung der Dekorplatte 2 aus einem U-Profil beschränkt. Es kann jedes beliebige - auch dreidimensional verformte - Profil verwendet werden. Wichtig ist, dass die fertig konfektionierte Dekorplatte 2, wie sie im vergrößerten Schnitt nach Figur 5 dargestellt ist, nun insgesamt in die Formausnehmung einer Spritzgussform eingelegt wird und nun mit einem aus Kunststoff bestehenden Trägerteil 6 hinterspritzt wird.

Im gezeigten Ausführungsbeispiel dringt damit das Kunststoffmaterial des Trägerteils 6 auch durch die Ausnehmungen 7 in der Dekorplatte 2 hindurch und legt sich an den Randseiten dieser Ausnehmungen 7 noch in der Dekorplatte 2 fest. Hierdurch wird ein noch verbesserter Haftverbund erreicht.

Ferner ist wesentlich bei dieser Ausführungsform, dass an der oberen Trägerplatte 9 des Trägerteils 6 ebenfalls Seitenschenkel 10 angeformt sind, die sich formschlüssig an die Seitenschenkel 8 der Dekorplatte 2 anlegen.

In dieser Ausführungsform ist im übrigen vorgesehen, dass an den Seitenschenkeln 10 nach außen gerichtete Ansätze 11 vorhanden sind, die ringsum laufend die Seitenschenkel 8 der Dekorplatte 2 untergreifen und damit auch einen stirnseitigen Verbund mit der Dekorplatte 2 ergeben.

Es ist im übrigen nicht dargestellt, dass im Innenraum des Trägerteils 6 noch verschiedene andere Funktionselemente angeordnet sind, die auch mit dem Trägerteil 6 werkstoffeinstückig verbunden sind. Es sind dies entsprechende Montageansätze, runde Befestigungselemente, die zum Aufstecken des Zierteils 1 auf entsprechende Befestigungsflächen dienen und dergleichen mehr.

Es kann im übrigen auch vorgesehen sein, dass das Kunststoffmaterial des Trägerteils 6 aus einem transparenten Material besteht und dass im Innenraum 17 Beleuchtungselemente angeordnet sind, die beispielsweise lichtleitend mit dem Trägerteil 6 verbunden sind. Bei dieser Ausführungsform würde dann im Bereich der Anzeigeelemente 4 oder der Funktionselemente 5 ein entsprechender Lichteffekt an der Sichtseite der Dekorplatte 2 erreicht werden.

Die Figuren 3 und 4 zeigen Abwandlungen der Seitenschenkel-Ausbildung im Vergleich zu Figur 2.

Figur 3 zeigt, dass auch der Seitenschenkel 10 des Trägerteils 6 vor der Stirnseite des Seitenschenkels 8 der Dekorplatte 2 aufhören kann.

Figur 4 zeigt auch, dass auch die Seitenschenkel 8 der Dekorplatte 2 mit einem entsprechenden, radial nach außen gerichteten, Ansatz ausgerüstet sein können, so dass damit die Seitenschenkel 10 des Trägerteils 6 untergriffen werden.

Die Figur 5 zeigt eine stark vergrößerte Darstellung der Oberfläche der Dekorplatte 2.

Es ist erkennbar, dass in dem Vollmaterial 13 der Dekorplatte 2 an der Oberfläche eine Bürstung 14 angeordnet ist. Statt dieser Bürstung können auch andere Oberflächeneffekte erzielt werden, wie z. B. die Anbringung von Noppen, Riffelungen, Sandstrahlungen und dergleichen mehr.

Um einen Oberflächenschutz zu erreichen, ist es ferner vorgesehen, dass dann diese Oberflächen-Behandlung beispielsweise mit der Bürstung 14 von einer transparenten Decklackschicht 15 abgedeckt wird.

Auf der Oberfläche dieser Decklackschicht 15 kann dann ein Texturdruck 16 aufgebracht werden. Dieser Texturdruck kann nur stellenweise vorhanden sein.

Wichtig ist, dass das so fertig konfektionierte und keiner Nachbehandlung mehr bedürfende Element einer Dekorplatte nun in dieser Form in die Kunststoff-Spritzgussform eingelegt wird und mit dem aus Kunststoff bestehenden Trägerteil 6 hinterspritzt wird. Auf diese Weise werden die Herstellungskosten gegenüber der eingangs genannten Fertigung um etwa 20% gesenkt. Es bedarf nicht mehr der aufwändigen Umbördelung der Kanten einer aus Aluminiumblech bestehenden Dekorplatte um das Trägerteil 6.

### Zeichnungs-Legende

- 1: Zierteil
- 2: Dekorplatte (aus Metall)
- 3: Dekorelemente
- 4: Anzeigeelement
- 5: Funktionselement
- 6: Trägerteil
- 7: Ausnehmung
- 8: Seitenschenkel
- 9: Trägerplatte
- 10: Seitenschenkel
- 11: Ansatz
- 12: Ansatz
- 13: Vollmaterial
- 14: Bürstung
- 15: Decklackschicht
- 16: Texturdruck
- 17: Innenraum

## Patentansprüche

1. Dekor-Zierteil, bestehend im Wesentlichen aus einem Trägerteil (6) aus Kunststoff und einer darauf befestigten Dekorplatte (2) aus dünnem Metall, zur Ausgestaltung des Innenraumes, in Land-, Luft- oder Wasserfahrzeugen, vornehmlich zur Verwendung als Armaturenbrett-Elemente, Mittel-Konsole oder als Türzierstäbe, wobei die fertig konfektionierte Dekorplatte (2) in eine Spritzgussform eingelegt wird, und dass das Trägerteil (6) als Spritzgussmasse unmittelbar auf die Rückseite der Dekorplatte (2) angespritzt wird, so dass beide Teile wenigstens in Teilbereichen so fest miteinander verbunden sind, dass sie eine stabile, fertige Einheit bilden
**dadurch gekennzeichnet,**
**dass** in der Oberfläche der Dekorplatte (2) Ausbrechungen oder Ausnehmungen (7) ausgebildet sind, durch welche das Kunststoffmaterial des Trägerteils (6) hindurch greift und dass im Innenraum des Trägerteils (6) Montageansätze, Befestigungselemente, die zum Aufstecken des Zierteils (1) auf entsprechende Befestigungsflächen dienen, und dergleichen mehr angeordnet sind, die mit dem Trägerteil (6) werkstoffeinstückig verbunden sind.

2. Dekor-Zierteil nach Anspruch 1, **dadurch gekennzeichnet, dass** an der Rückseite der Dekorplatte (2) keine Rastnoppen, Ansätze und dergleichen angeordnet sind.

3. Dekor-Zierteil nach Anspruch 1 oder 2, **dadurch gekennzeichnet, dass** die Rückseite der Dekorplatte (2) vollkommen glatt und eben ist.

4. Dekor-Zierteil nach einem der Ansprüche 1 bis 3, **dadurch gekennzeichnet, dass** die Dekorplatte (2) von dem Kunststoff-Trägerteil (6) allseitig getragen und untergriffen ist.

5. Dekor-Zierteil nach einem der Ansprüche 1 bis 4, **dadurch gekennzeichnet, dass** die Dekorplatte (2) im Wesentlichen einen U-förmigen Querschnitt aufweist.

6. Dekor-Zierteil nach einem der Ansprüche 1 bis 5, **dadurch gekennzeichnet, dass** die Dekorplatte (2) eine beliebige, auch sphärische oder dreidimensionale Form aufweist.

7. Dekor-Zierteil nach einem der Ansprüche 1 bis 6, **dadurch gekennzeichnet, dass** das Kunststoff-Trägerteil (6) mit nach außen gerichteten Schenkeln (10) den jeweils zugeordneten Schenkel (8) der Dekorplatte (2) untergreift.

8. Dekor-Zierteil nach einem der Ansprüche 1 bis 7, **dadurch gekennzeichnet, dass** das Kunststoffmaterial des Trägerteils (6) aus einem transparenten Material besteht.

9. Dekor-Zierteil nach einem der Ansprüche 1 bis 8, **dadurch gekennzeichnet, dass** im Bereich der Ausnehmungen (7, 17) der Trägerplatte (9) ein transparentes Kunststoffmaterial (18) verwendet wird, damit die Möglichkeit besteht, dass die von der Sichtseite her in der Dekorplatte erkennbaren Dekorelemente, Anzeige- und Funktionselemente (3, 4) beleuchtet werden können.

10. Dekor-Zierteil nach einem der Ansprüche 1 bis 9, **dadurch gekennzeichnet, dass** im Innenraum (17) des Trägerteiles (6) Beleuchtungselemente angeordnet sind, die lichtleitend mit dem Trägerteil (6) verbunden sind.

11. Dekor-Zierteil nach einem der Ansprüche 1 bis 10, **dadurch gekennzeichnet, dass** die durch die Ausnehmungen (7) der Dekorplatte (2) hindurchgreifenden Kunststoffteile Dekorelemente (3) und/oder Anzeigeelemente (4), Funktionselemente, Taster, Schaltelemente und dergleichen mehr sind.

12. Dekor-Zierteil nach einem der Ansprüche 1 bis 11, **dadurch gekennzeichnet, dass** die Oberfläche der Dekorplatte (2) von einer transparenten Decklackschicht (15) abgedeckt ist.

13. Dekor-Zierteil nach Anspruch 12, **dadurch gekennzeichnet, dass** wenigstens teilweise auf der Oberfläche der Decklackschicht (15) ein Texturdruck (16) aufgebracht ist.

## Claims

1. Decorative trim part, substantially consisting of a support part (6) made of plastics material and a decorative plate (2) which is attached thereto and is made of thin metal, for embellishing the interior of land, air and water craft, mainly for use as dashboard elements, central consoles or as door trim bars, the finished decorative plate (2) being introduced into an injection mould, and the support part (6) being injected as injection compound directly onto the rear of the decorative plate (2), such that both parts are joined together in such a firm manner at least in partial regions that they form a stable, finished unit, **characterised in that** formed in the surface of the decorative plate (2) are openings or recesses (7), through which the plastics material of the support part (6) engages, and **in that** positioned inside the support part (6) are assembly attachments, attachment elements which serve to attach the trim part (1) to respective attachment surfaces, and the like, which are joined to the support part (6) in a materially integral manner.

2. Decorative trim part according to claim 1, **characterised in that** no latching knobs, shoulders and the like are positioned on the rear of the decorative plate (2).

3. Decorative trim part according to either claim 1 or claim 2, **characterised in that** the rear of the decorative plate (2) is completely smooth and flat.

4. Decorative trim part according to any one of claims 1 to 3, **characterised in that** the decorative plate (2) is supported and underpinned on all sides by the plastics material support part (6).

5. Decorative trim part according to any one of claims 1 to 4, **characterised in that** the decorative plate (2) has a substantially U-shaped cross section.

6. Decorative trim part according to any one of claims 1 to 5, **characterised in that** the decorative plate (2) has any shape, even a spherical or three-dimensional shape.

7. Decorative trim part according to any one of claims 1 to 6, **characterised in that** the plastics material support part (6) engages under the respectively associated limb (8) of the decorative plate (2) with outwardly directed limbs (10).

8. Decorative trim part according to any one of claims 1 to 7, **characterised in that** the plastics material of the support part (6) consists of a transparent material.

9. Decorative trim part according to any one of claims 1 to 8, **characterised in that** a transparent plastics material (18) is used in the region of the recesses (7, 17) in the support plate (9), such that it is possible for the decorative elements, display and functional elements (3, 4) perceptible from the visible side in the decorative plate to be illuminated.

10. Decorative trim part according to any one of claims 1 to 9, **characterised in that** positioned in the interior (17) of the support part (6) are illumination elements which are connected to the support part (6) in a light-conducting manner.

11. Decorative trim part according to any one of claims 1 to 10, **characterised in that** the plastics material parts engaging through the recesses (7) in the decorative plate (2) are decorative elements (3) and/or display elements (4), functional elements, push buttons, switch elements and the like.

12. Decorative trim part according to any one of claims 1 to 11, **characterised in that** the surface of the decorative plate (2) is covered by a transparent protective lacquer layer (15).

13. Decorative trim part according to claim 12, **characterised in that** a texture print (16) is applied to at least parts of the surface of the protective lacquer layer (15).

## Revendications

1. Elément de décor composé essentiellement d'un élément de support (6) en matière plastique et d'une plaque de décor (2) en métal mince qui est fixée sur celui-ci, pour l'aménagement de l'habitacle de véhicules terrestres, de véhicules aériens ou de bateaux, à utiliser principalement comme éléments de tableau de bord, comme console centrale ou comme tiges de décoration de porte, la plaque de décor finie (2) étant placée dans un moule d'injection et l'élément de support (6) étant injecté directement sur la face arrière de ladite plaque (2), sous la forme d'une masse d'injection, de sorte que les deux éléments sont reliés solidement au moins dans certaines zones de manière à former une unité finie stable,
**caractérisé en ce qu'**il est prévu dans la surface de la plaque de décor (2) des ouvertures ou des orifices (7) par lesquels la matière plastique de l'élément de support (6) passe, et **en ce qu'**à l'intérieur de l'élément de support (6) sont disposés des saillies de montage, des éléments de fixation servant à enfiler l'élément de décor (1) sur des surfaces de fixation correspondantes, etc., qui sont venus de matière avec l'élément de support (6).

2. Elément de décor selon la revendication 1, **caractérisé en ce que** sur la face arrière de la plaque de décor (2), il n'est pas prévu de saillies d'enclenchement, d'ergots ou d'éléments similaires.

3. Elément de décor selon la revendication 1 où 2, **caractérisé en ce que** la face arrière de la plaque de décor (2) est complètement lisse et plane.

4. Elément de décor selon l'une des revendications 1 à 3, **caractérisé en ce que** la plaque de décor (2) est portée de tous les côtés et enveloppée par-dessous par l'élément de support en matière plastique (6).

5. Elément de décor selon l'une des revendications 1 à 4, **caractérisé en ce que** la plaque de décor (2) présente dans l'ensemble une section transversale en U.

6. Elément de décor selon l'une des revendications 1 à 5, **caractérisé en ce que** la plaque de décor (2) présente n'importe quelle forme, y compris sphérique ou tridimensionnelle.

7. Elément de décor selon l'une des revendications 1 à 6, **caractérisé en ce que** l'élément de support en matière plastique (6) enveloppe par-dessous, avec des branches (10) dirigées vers l'extérieur, les branches associées (8) de la plaque de décor (2).

8. Elément de décor selon l'une des revendications 1 à 7, **caractérisé en ce que** la matière plastique de l'élément de support (6) se compose d'une matière transparente.

9. Elément de décor selon l'une des revendications 1 à 8, **caractérisé en ce qu'**on utilise dans la zone des orifices (7, 17) de la plaque de support (9) une matière plastique transparente (18) pour donner la possibilité d'éclairer les éléments de décor, les éléments d'affichage et les éléments fonctionnels (3, 4) qui sont visibles du côté visible, dans la plaque de décor.

10. Elément de décor selon l'une des revendications 1 à 9, **caractérisé en ce qu'**il est prévu dans l'espace intérieur (17) de l'élément de support (6) des éléments d'éclairage qui sont reliés à l'élément de support (6) de manière à transmettre la lumière.

11. Elément de décor selon l'une des revendications 1 à 10, **caractérisé en ce que** les éléments en matière plastique qui traversent les orifices (7) de la plaque de décor (2) sont constitués par des éléments de décor (3) et/ou des éléments d'affichage (4), des éléments fonctionnels, des boutons-poussoirs, des éléments de commande, etc.

12. Elément de décor selon l'une des revendications 1 à 11, **caractérisé en ce que** la surface de la plaque de décor (2) est couverte par une couche de vernis transparente (15).

13. Elément de décor selon la revendication 12, **caractérisé en ce qu'**une texture imprimée (16) est appliquée sur une partie au moins de la surface de la couche de vernis (15).
